# EUROPÄISCHE PATENTSCHRIFT

(11) **EP 2 538 072 B1**
(45) Veröffentlichungstag und Bekanntmachung des Hinweises auf die Patenterteilung: **18.05.2016**
(21) Anmeldenummer: 12173269.7
(22) Anmeldetag: 22.06.2012
(51) Int. Cl.: F03B 13/06, F03D 9/10

(54) **Unterirdisches Pumpspeicherkraftwerk**
Subterranean pump storage power plant
Centrale souterraine d'accumulation par pompage

(30) Priorität: 24.06.2011 DE 102011051305
(43) Veröffentlichungstag der Anmeldung: 26.12.2012
(73) Patentinhaber: TECSOL GmbH, 26446 Friedeburg (DE)
(72) Erfinder: Windoffer, Ralf, 49832 Andervenne (DE); Klaus, Ernst, 30177 Hannover (DE)
(74) Vertreter: Kloiber, Thomas

(56) Entgegenhaltungen:
- EP-A1- 0 247 690
- WO-A1-01/96736
- DE-A1-102006 003 982
- DE-A1-102009 054 364
- US-A- 4 182 128

## Beschreibung

Die vorliegende Erfindung betrifft ein Pumpspeicherkraftwerk mit mindestens einem oberen Flüssigkeitsreservoir und mindestens einem unteren Flüssigkeitsreservoir, die zur Aufnahme von Arbeitsflüssigkeit dienen, mit mindestens einer durch einen Elektromotor antreibbaren Pumpe, mittels der die Arbeitsflüssigkeit aus dem mindestens einen unteren Flüssigkeitsreservoir über mindestens eine Verbindungsleitung in das mindestens eine obere Flüssigkeitsreservoir pumpbar ist, mit mindestens einer mit einem elektrischen Generator verbundenen Turbine, die von der Arbeitsflüssigkeit antreibbar ist, wenn diese von dem mindestens einen oberen Flüssigkeitsreservoir über mindestens eine Verbindungsleitung in das mindestens eine untere Flüssigkeitsreservoir fließt, wobei die Flüssigkeitsreservoirs aus ausgesolten Kavernen in einer Salzlagerstätte z.B. einem Salzstock bestehen, wobei die Kavernen über mindestens eine im Wesentlichen vertikale Verbindungsleitung verbunden sind, deren unteres Ende bis in den Bereich des Kavernenbodens der unteren Kaverne ragt.

Ein Pumpspeicherkraftwerk ist beispielsweise aus der US 4,182,128 A bekannt. Bei dem bekannten Pumpspeicherkraftwerk liegen die beiden Kavernen nicht nur vertikal in unterschiedlichen Tiefen, sondern sind auch horizontal voneinander beabstandet. Von jeder Kaverne führt eine Gasaustauschleitung an die Erdoberfläche, wo ein Gasaustausch stattfindet. Eine von der Erdoberfläche ausgehende Hauptbohrung erstreckt sich horizontal zwischen den beiden Kavernen bis in den Bodenbereich der unteren Kaverne, wo ein Maschinenraum mit einer Pumpen-Turbinen-Einheit-untergebracht ist. Eine Verbindungsleitung führt horizontal vom Maschinenraum in den Bodenbereich der unteren Kaverne. Eine zweite Verbindungsleitung führt vertikal durch die Hauptbohrung bis in die Höhe des Bodenbereichs der oberen Kaverne und verläuft dann horizontal weiter bis in die obere Kaverne. Diese Bauart ist aufwändig, denn zusätzlich zu den zwei Kavernen muss ein weiterer Hohlraum im Salzstock für die Unterbringung des Maschinenraumes hergestellt werden. Auch die Führung der Verbindungsleitungen zum Austausch der Arbeitsflüssigkeit und der Gasaustauschleitungen ist aufwändig und strömungsungünstig.

Aus der DE 10 2006 003 982 A1 ist ein Pumpspeicherkraftwerk bekannt, bei dem die Kavernen über mindestens eine im Wesentlichen vertikale Verbindungsleitung verbunden sind, deren unteres Ende bis in den Bereich des Kavernenbodens der unteren Kaverne ragt.

Aufgabe der Erfindung ist es, ein einfach aufgebautes und mit geringem Aufwand herstellbares Pumpspeicherkraftwerk anzugeben.

Die Erfindung löst diese Aufgabe dadurch, dass eine obere Kaverne des oberen Flüssigkeitsreservoirs im Wesentlichen vertikal über einer unteren Kaverne des unteren Flüssigkeitsreservoirs angeordnet ist und dass die Pumpe oder Turbine oder eine Pumpen-Turbinen-Einheit am unteren Ende der Verbindungsleitung angeordnet ist, wobei die Verbindungsleitung ein Hauptrohr mit einem Rohrdurchmesser zwischen 0,4 m und 1,0 m ist, wobei sich das die Verbindungsleitung bildende Hauptrohr durch die obere Kaverne hindurch und weiter nach oben bis zur Erdoberfläche erstreckt. Durch die Anordnung der Pumpe oder der Pumpen-Turbinen-Einheit am unteren Ende der Verbindungsleitung ist ein separater Maschinenraum nicht mehr erforderlich. Durch die Anordnung der Kavernen im Wesentlichen vertikal übereinander kann die Verbindungsleitung einfach, kurz und strömungsgünstig ausgestaltet sein.

In Ausgestaltung der Erfindung ist vorgesehen, dass die Arbeitsflüssigkeit eine gesättigte Salzlauge ist. Eine gesättigte Salzlauge kann die Kavernen nicht weiter aussolen, so dass deren Form und Volumen über eine sehr lange Betriebsdauer im Wesentlichen unverändert bleibt. Des Weiteren hat eine gesättigte Salzlauge den Vorteil einer hohen spezifischen Masse, so dass pro Volumeneinheit besonders viel potentielle Energie speicherbar ist. Selbstverständlich umfasst die Erfindung aber auch andere Arbeitsflüssigkeiten, die die Kavernen im Wesentlichen nicht weiter verändern, insbesondere Erdöl oder Erdölprodukte.

In einer bevorzugten Ausführungsform erstrecken sich die Kavernen vom Kavernendach bis zum Kavernenboden jeweils über einen Höhenbereich von 100 m bis 200 m, vorzugsweise über 150 m. Kavernen in dieser Größenordnung sind unproblematisch in der Herstellung und im Betrieb und eignen sich für die Speicherung ausreichend großer Energiemengen. Kleinere Kavernen sind wegen ihrer geringen Speicherkapazität ungünstiger. Größere Kavernen bergen die Gefahr einer strukturellen Instabilität.

Es wurde empfohlen, das Kavernendach der oberen Kaverne in einer Tiefe zwischen 200 m und 800 m unter der Erdoberfläche anzuordnen, vorzugsweise in einer Tiefe von 700 m. In solchen Tiefen weisen bekannte Salzstöcke ausreichend stabile Bedingungen auf. Sollten die geologischen Gegebenheiten es zulassen kann das Kavernendach auch in geringen Tiefen ausgebildet werden.

Das Kavernendach der unteren Kaverne wird vorzugsweise in einer Tiefe zwischen 600 m und 1500 m unter der Erdoberfläche angeordnet, am besten in einer Tiefe von 1200 m. In dem genannten Tiefenbereich ist die Herstellung der Kaverne noch ohne übermäßigen Aufwand möglich und bekannte Salzstöcke bieten in diesen Tiefen auch ausreichend stabile Bedingungen für die Aussohlung der Kaverne. Sollten die geologischen Gegebenheiten es zulassen sind auch geringere Tiefenlagen möglich. Des Weiteren ist der Höhenunterschied zur oberen Kaverne so groß, dass eine ausreichende Menge elektrischer Energie erzeugt werden kann.

Vorzugsweise weisen die erfindungsgemäßen Kavernen ein Volumen zwischen 200.000 m³ und 400.000 m³, vorzugsweise von 300.000 m³ auf.

In Ausgestaltung der Erfindung ist die Verbindungsleitung im Bereich des Kavernenbodens der oberen Kaverne mit einem Absperrventil versehen. Nachdem der Pumpvorgang abgeschlossen und die obere Kaverne mit Arbeitsflüssigkeit gefüllt ist, kann so durch Schließen des Absperrventils das Ausfließen der Arbeitsflüssigkeit aus der oberen in die untere Kaverne verhindert werden, solange kein zusätzlicher Bedarf an elektrischer Energie besteht. Sobald zusätzlicher Energiebedarf vorhanden ist, kann das Absperrventil geöffnet werden, um das Zurückfließen der Arbeitsflüssigkeit aus der oberen Kaverne in die untere Kaverne und damit den Antrieb der Turbine zur Stromerzeugung zu ermöglichen.

Das Hauptrohr weist vorzugsweise einen Rohrdurchmesser von 0,56 m auf. Dieser Rohrdurchmesser erlaubt den Durchfluss ausreichender Mengen von Arbeitsflüssigkeit pro Zeiteinheit und somit eine ausreichende elektrische Leistung des von der Turbine angetriebenen Generators.

Durch die Maßnahme, dass sich das die Verbindungsleitung bildende Hauptrohr durch die obere Kaverne hindurch und weiter nach oben bis zur Erdoberfläche erstreckt, ist eine einfache Installation der Verbindungsleitung von der Erdoberfläche aus möglich. Dabei ist es besonders zweckmäßig, wenn sich das Hauptrohr durch eine von der Erdoberfläche bis zum Kavernendach der oberen Kaverne und weiter vom Kavernenboden der oberen Kaverne bis zum Kavernendach der unteren Kaverne reichende Hauptbohrung erstreckt. Eine solche Hauptbohrung ist für die Herstellung der Kavernen erforderlich und daher ohnehin vorhanden. Es ist daher nur zweckmäßig, das Hauptrohr durch die bereits vorhandene Hauptbohrung zu führen.

Um eine Beschädigung der Hauptbohrung bei der Herstellung der Kavernen und beim späteren Betrieb des Pumpspeicherkraftwerks zu vermeiden, wird vorgeschlagen, dass der Wandbereich der Hauptbohrung zwischen der Erdoberfläche und dem Kavernendach der oberen Kaverne und der Wandbereich der Hauptbohrung zwischen dem Kavernenboden der oberen Kaverne und dem Kavernendach der unteren Kaverne mit einem Rohr geschützt wird, welches mit Zement zum Gebirge hin befestigt ist. Insbesondere bei der Herstellung der Kavernen durch Aussolen verhindert dieser Schutz ein Aussolen der so ausgekleideten Bereiche der Hauptbohrung.

In einer bevorzugten Ausführungsform der Erfindung ist das Hauptrohr in den beiden Bereichen der Kavernendächer der Kavernen und im Bereich des Kavernenbodens der oberen Kaverne gegenüber der Hauptbohrung abgedichtet. Insbesondere die Abdichtung im Bereich des Kavernenbodens der oberen Kaverne verhindert ein Eindringen der Arbeitsflüssigkeit in den zwischen den beiden Kavernen befindlichen Bereich der Hauptbohrung und letztendlich das unkontrollierte Abfließen der Arbeitsflüssigkeit aus der oberen Kaverne in die untere Kaverne, ohne dass dabei Energie erzeugt werden könnte. Die in beiden Bereichen der Kavernendächer der Kavernen angeordneten Dichtungen verhindern ein Überfließen der Arbeitsflüssigkeit aus der jeweiligen Kaverne in den darüber liegenden Bereich der Häuptbohrung, wo die Arbeitsflüssigkeit Schaden anrichten könnte.

Die Erfindung wird noch verbessert durch die Maßnahme, dass ein Gasaustauschrohr vorgesehen ist, das an seinem unteren Ende eine untere Gasöffnung aufweist und in den Bereich des Kavernendaches der unteren Kaverne ragt und das im Bereich des Kavernendaches der oberen Kaverne eine obere Gasöffnung aufweist. Das Gasaustauschrohr ermöglicht über seine beiden Gasöffnungen einen Gasaustausch zwischen den beiden Kavernen.

Wenn Arbeitsflüssigkeit von einer in die andere Kaverne fließt, ändern sich auch die Größen der über der Arbeitsflüssigkeit jeweils vorhandenen gasgefüllten Volumina. Dies würde in der sich füllenden Kaverne zu einem Druckanstieg führen. Grundsätzlich ließe sich auch in dem komprimierten Gas durch den Druckanstieg zusätzlich noch Energie speichern. Allerdings wird ein Teil der zugeführten Energie für die Erwärmung des Gases bei der Kompression aufgewendet. Wenn nun das Gas während eines längeren Zeitraums der Energiespeicherung die Wärme an die Kavernenwände oder die Arbeitsflüssigkeit abgibt, ist der in Wärme umgewandelte Energieanteil verloren und kann nicht wieder zurückgewonnen werden.

Es ist deshalb vorteilhaft für einen Druckausgleich zu sorgen. Dies geschieht erfindungsgemäß durch die Verbindung der in den beiden Kavernen vorhandenen Gasvolumina mittels des Gasaustauschrohrs, so dass Gas aus der sich füllenden Kaverne in die sich leerende Kaverne fließen kann, ohne dass eine wesentliche Kompression des Gases erfolgt.

Wenn aus betrieblichen Gründen ausnahmsweise kein Gasaustausch erfolgen soll, kann dieser auf Wunsch zeitweise verhindert werden, wenn die untere Gasöffnung und die obere Gasöffnung des Gasaustauschrohrs jeweils durch Absperrventile verschließbar sind. Die Erfindung umfasst auch die Speicherung zusätzlicher Energie in dem Gasdruckpolster durch entsprechendes Ansteuern der Druckausgleichsventile unter Inkaufnahme des schlechteren Wirkungsgrades.

Durch entsprechendes Ansteuern der Druckausgleichsventile oder durch gezielte Injektion von Gas, insbesondere Luft oder Stickstoff, kann der Druck in der Kaverne auch erhöht werden, um die Konvergenz, d.h. das natürliche Schrumpfen der Kaverne zu verringern.

In einer alternativen Ausführungsform sind zwischen der oberen Kaverne und der unteren Kaverne zwei Verbindungsleitungen vorgesehen, wobei am unteren Ende der ersten Verbindungsleitung die Pumpe und am unteren Ende der zweiten Verbindungsleitung die Turbine angeordnet ist. Bei dieser Ausführungsform ist die Funktion der Turbine und der Pumpe nicht in einer Pumpen-Turbinen-Einheit vereint, sondern separat verwirklicht.

Die Pumpe ist am unteren Ende einer ersten Verbindungsleitung angeordnet und ermöglicht das Hochpumpen von Arbeitsflüssigkeit aus der unteren Kaverne in die obere Kaverne durch die erste Verbindungsleitung. Wenn die gespeicherte Energie wieder in elektrischen Strom zurückverwandelt werden soll, die zweite Verbindungsleitung geöffnet, so dass die Arbeitsflüssigkeit durch die zweite Verbindungsleitung hindurchströmt und am unteren Ende auf die dort angeordnete Turbine trifft, die wiederum einen Generator antreibt, um elektrische Energie zu erzeugen.

Es ist daher notwendig, dass beide Verbindungsleitungen im Bereich des Kavernenbodens der oberen Kaverne jeweils ein Absperrventil aufweisen, wobei das Absperrventil der ersten Verbindungsleitung geöffnet wird, um Arbeitsflüssigkeit von unten nach oben zu pumpen, während gleichzeitig das zweite Absperrventil der zweiten Verbindungsleitung geschlossen bleibt. Im Falle der Stromerzeugung wird umgekehrt das erste Absperrventil der ersten Verbindungsleitung geschlossen und das zweite Absperrventil der zweiten Verbindungsleitung geöffnet, damit die Arbeitsflüssigkeit durch die zweite Verbindungsleitung zur Turbine strömen kann. Soll die Energie einfach nur gespeichert bleiben, werden beide Absperrventile geschlossen.

In Weiterbildung der zweiten Ausführungsform ist vorgesehen, dass beide Verbindungsleitungen im Bereich des Kavernendaches der oberen Kaverne und im Bereich des Kavernendaches der unteren Kaverne jeweils zusätzliche Gasöffnungen mit Absperrventilen aufweisen. Das Öffnen beider Gasöffnungen einer der beiden Verbindungsleitungen ermöglicht deren Verwendung als Gasaustauschleitung während Arbeitsflüssigkeit durch die jeweils andere Verbindungsleitung fließt. Ein zusätzliches Gasaustauschrohr ist also bei der zweiten Ausführungsform der Erfindung nicht erforderlich.

Zur Erfindung gehört auch ein Verfahren zur Herstellung eines Pumpspeicherkraftwerks der weiter oben beschriebenen Art. Die Herstellung umfasst die folgenden Verrfahrensschritte:
- Abteufen einer Hauptbohrung bis an die Stelle wo eine untere Kaverne für ein unteres Flüssigkeitsreservoir geplant ist;
- Auskleiden der Bohrungswände mit einem Schutzrohr und Einbringen einer Zementierung zwischen Schutzrohr und Gebirge zwischen der Erdoberfläche und dem Kavernendach einer geplanten oberen Kaverne für ein oberes Flüssigkeitsreservoir und im Wandbereich zwischen dem Kavernenboden der geplanten oberen Kaverne und dem Kavernendach der geplanten unteren Kaverne;
- Einführen eines Solrohrs in die Hauptbohrung, bis sein unteres Ende im Bereich der herzustellenden unteren Kaverne zu liegen kommt, und Herstellen der unteren Kaverne durch Aussolen;
- Herausziehen des Solrohrs aus der mit Sole gefüllten unteren Kaverne und der Hauptbohrung, bis sein unteres Ende im Bereich der herzustellenden oberen Kaverne zu liegen kommt, und Herstellen der oberen Kaverne durch Aussolen;
- Einführen eines an seinem unteren Ende mit einer unteren Flüssigkeitsöffnung versehenen und mit einer Pumpe oder einer Pumpen-Turbinen-Einheit verbundenen Hauptrohrs in die Hauptbohrung, so dass das unter Ende im Bereich des Kavernenbodens der unteren Kaverne liegt, wobei eine obere Flüssigkeitsöffnung des Hauptrohrs im Bereich des Kavernenbodens der oberen Kaverne liegt;
- Abdichten des Hauptrohrs gegenüber der Hauptbohrung im Bereich des Kavernendachs und des Kavernenbodens der oberen Kaverne und im Bereich des Kavernendachs der unteren Kaverne.

Ausführungsbeispiele der Erfindung werden nachfolgend anhand der Zeichnungen näher erläutert. Die Figuren zeigen im Einzelnen:
- Figur 1:: die Herstellung eines erfindungsgemäßen Pumpspeicherkraftwerks nach dem Abteufen einer Hauptbohrung in einer schematischen Darstellung;
- Figur 2:: die Herstellung einer unteren Kaverne des Pumpspeicherkraftwerks durch Aussolen;
- Figur 3:: die Herstellung einer oberen Kaverne des Pumpspeicherkraftwerks durch Aussohlen;
- Figur 4:: ein erfindungsgemäßes Pumpspeicherkraftwerk mit eingesetztem und abgedichteten Hauptrohr;
- Figur 5:: eine schematische Darstellung eines betriebsfertigen Pumpspeicherkraftwerks in einer ersten Ausführungsform während des Speichervorgangs;
- Figur 6:: wie Figur 5, während der Stromerzeugung;
- Figur 7:: eine schematische Darstellung eines betriebsfertigen Pumpspeicherkraftwerks in einer zweiten Ausführungsform, während des Speichervorgangs;
- Figur 8:: wie Figur 7, während der Stromerzeugung.

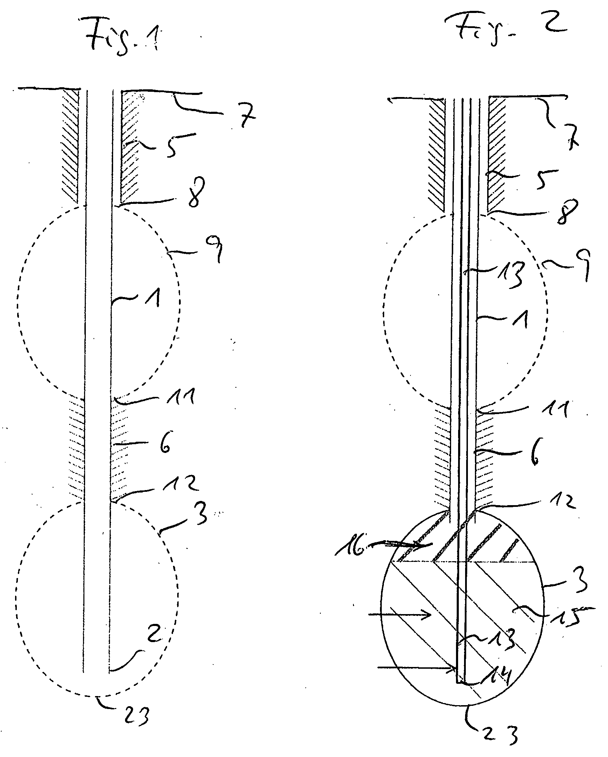

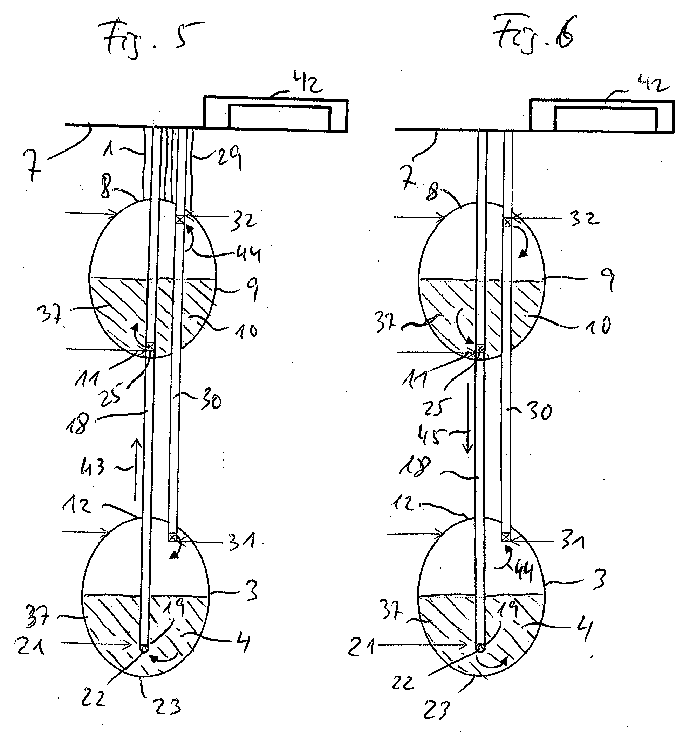

In Figur 1 ist die erste Phase der Herstellung eines erfindungsgemäßen Pumpspeicherkraftwerks dargestellt. Zuerst wird eine Hauptbohrung 1 abgeteuft, deren unteres Ende eine Stelle 2 erreicht, wo eine untere Kaverne 3 für ein unteres Flüssigkeitsreservoir 4 (siehe Figuren 5 bis 8) geplant ist. Die untere Kaverne 3 ist in Figur 1 als Strichelung angedeutet.

In einem weiteren Verfahrensschritt wird die Bohrungswand 5 im Bereich zwischen der Erdoberfläche 7 und dem Kavernendach 8 einer geplanten oberen Kaverne (in den Figuren 1 bis 3 als Strichelung angedeutet) für ein oberes Flüssigkeitsreservoir 10 (siehe Figuren 5 bis 8) und im Bereich zwischen dem Kavernenboden 11 der geplanten oberen Kaverne 9 und dem Kavernendach 12 der geplanten unteren Kaverne 3 eine Bohrungswand 6 mit einem Schutzrohr und Zement ausgekleidet, um die Bohrungswände 5, 6 zu stabilisieren.

In einem nächsten Verfahrensschritt wird ein Solrohr 13 in die Hauptbohrung 1 eingeführt, bis sein unteres Ende 14, wie in Figur 2 dargestellt, im Bereich der herzustellenden unteren Kaverne 3 zu liegen kommt. Die untere Kaverne 3 wird sodann durch Aussolen des Salzstocks auf an sich bekannte Weise hergestellt, wobei durch das Solrohr 13 Wasser 15 in den Salzstock eingebracht wird. Das Wasser 15 löst das Salz des Salzstocks, bis es zu einer gesättigten Salzlauge wird. Diese kann durch das Ende 14 der Solleitung 13 zutagegefördert und durch frisches Wasser ersetzt. Dieser Vorgang wird kontinuierlich fortgesetzt, bis die untere Kaverne 3 das gewünschte Volumen erreicht hat.

Oberhalb des Wassers 15 bzw. der Sole befindet sich ein Blanket 16. Das Blanket 16 kann gasförmig oder flüssig sein und schwimmt auf der Sole. Es verhindert so einen unkontrollierten Solumlauf in der Kaverne 3.

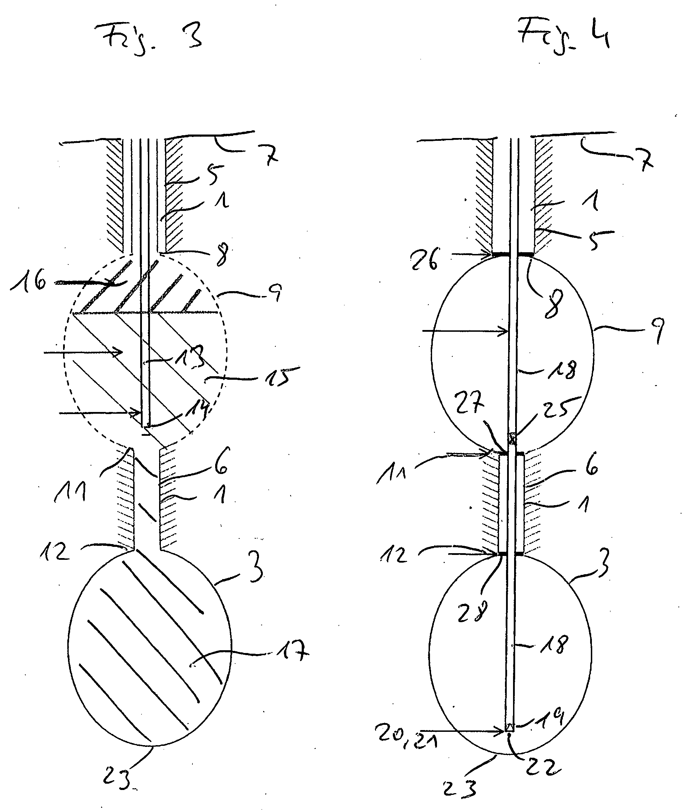

In einem weiteren Verfahrensschritt belässt man die entstandene gesättigte Salzlauge 17 in der unteren Kaverne und zieht das Sohlrohr 13 aus der mit gesättigter Salzlauge 17 gefüllten unteren Kaverne 3 und aus dem Abschnitt 6 der Hauptbohrung 1 heraus, bis sein unteres Ende 14, wie in Figur 3 gezeigt, im Bereich der herzustellenden oberen Kaverne 9 zu liegen kommt. Danach wird die obere Kaverne 9 in an sich bekannter Weise durch Aussolen hergestellt wie bereits oben im Zusammenhang mit der Herstellung der unteren Kaverne 3 beschrieben.

In einem weiteren Verfahrensschritt wird in die Hauptbohrung 1 ein Hauptrohr 18 eingeführt, welches an seinem unteren Ende 19 mit einer Flüssigkeitsöffnung 22 versehen ist. Außerdem ist das untere Ende 19 des Hauptrohrs 18 mit einer Pumpe 20 oder alternativ mit einer Pumpen-Turbinen-Einheit 21 verbunden. Das untere Ende 19 des Hauptrohrs 18 liegt im Bereich des Kavernenbodens 23 der unteren Kaverne 3. Das Hauptrohr 18 hat eine obere Flüssigkeitsöffnung 25, die im Bereich des Kavernenbodens 11 der oberen Kaverne 9 angeordnet ist.

In einem weiteren Verfahrensschritt wird das Hauptrohr 18 gegenüber der Hauptbohrung 1 im Bereich des Kavernendachs 8 der oberen Kaverne 9 mittels einer Dichtung 26 abgedichtet. Im Bereich des Kavernenbodens 11 der oberen Kaverne 9 wird das Hauptrohr 1 mittels einer Dichtung 27 gegen die Hauptbohrung 1 abgedichtet. Im Bereich des Kavernendach 12 der unteren Kaverne 3 wird das Hauptrohr 18 mittels einer Dichtung 28 gegen die Hauptbohrung 1 abgedichtet.

Bei einer in den Figuren 5 und 6 dargestellten ersten Ausführungsform der Erfindung ist das Hauptrohr 18 an seinem unteren Ende 19 mit einer Pumpen-Turbinen-Einheit 21 verbunden. Bei dieser Ausführungsform umfasst das Herstellungsverfahren einen Verfahrensschritt, bei dem in der Nähe der Hauptbohrung eine im Wesentlichen parallel zur Hauptbohrung 1 verlaufende Hilfsbohrung 29 abgeteuft wird. Die Hilfsbohrung 29 ist in Figur 5 nur im oberen Abschnitt kurz unter der Erdoberfläche 7 andeutungsweise dargestellt. Sodann wird die Hilfsbohrung 29 mit einem Gasaustauschrohr 30 versehen, so dass eine untere Gasöffnung 31 am unteren Ende des Gasaustauschrohrs 30 im Bereich des Kavernendachs 12 der unteren Kaverne 3 angeordnet ist. Eine obere Gasöffnung 32 des Gasaustauschrohrs 30 liegt im Bereich des Kavernendachs 8 der oberen Kaverne 9.

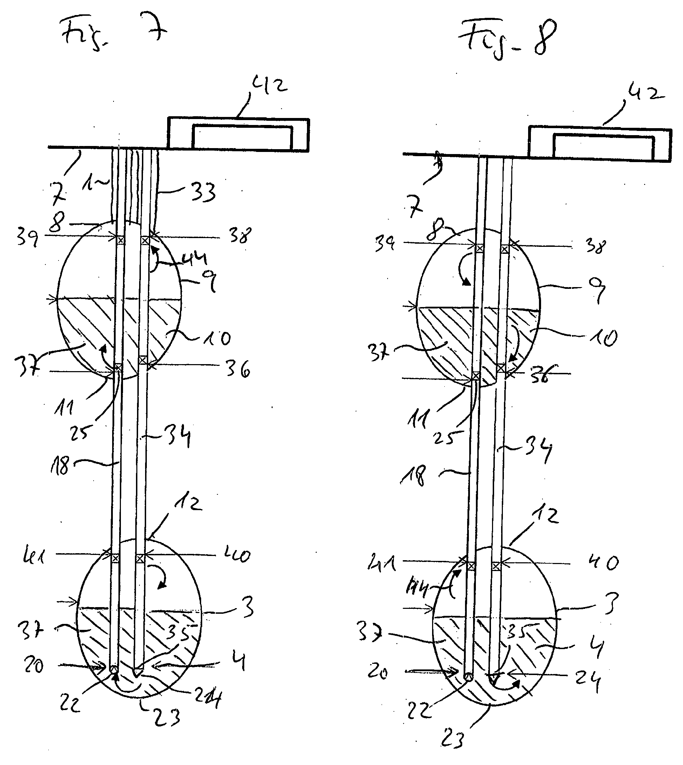

Bei einer zweiten, in den Figuren 7 und 8 dargestellten Ausführungsform der Erfindung ist das Hauptrohr 18 an seinem unteren Ende 19 mit einer Pumpe 20 verbunden.

Ein zur Herstellung eines Pumpspeicherkraftwerks gemäß der zweiten Ausführungsform geeignetes Verfahren umfasst den Verfahrensschritt, dass in der Nähe der Hauptbohrung 1 eine im Wesentlichen parallel zur Hauptbohrung 1 verlaufenden Nebenbohrung 33 abgeteuft wird. Die Nebenbohrung wird sodann mit einem Turbinenrohr 34 versehen, welches an seinem unteren Ende eine untere Flüssigkeitsöffnung 35 aufweist und mit einer Turbine 24 verbunden ist. Die Flüssigkeitsöffnung 35 liegt am unteren Ende des Turbinenrohrs im Bereich des Kavernenboden 23 der unteren Kaverne 3. Eine obere Flüssigkeitsöffnung 36 des Turbinenrohrs 34 liegt im Bereich des Kavernenbodens 11 der oberen Kaverne 9.

Die Hauptbohrung 1 und die Nebenbohrung 33 sind nur im oberen Teil der Figur 7 in der Nähe der Erdoberfläche 7 andeutungsweise dargestellt.

Als Arbeitsflüssigkeit 37 wird in den hier dargestellten Ausführungsbeispielen eine gesättigte Salzlauge verwendet.

Im Bereich des Kavernendaches 8 der oberen Kaverne 9 ist im Hauptrohr 18 eine obere Gasöffnung 39 und im Turbinenrohr 34 eine obere Gasöffnung 38 angeordnet. Im Bereich des Kavernendaches 12 der unteren Kaverne 3 ist im Hauptrohr eine untere Gasöffnung 41 und im Turbinenrohr 34 eine untere Gasöffnung 40 angeordnet. Alle Gasöffnungen 38 bis 41 können mittels nicht explizit dargstellter Ventile verschlossen werden.

Ebenfalls nicht dargestellt sind Steuerleitungen zu den genannten Ventilen, zu allen ebenfalls nicht näher beschriebenen Ventilen von anderen Gasöffnungen 31, 32 oder Flüssigkeitsöffnungen 25, 36. Des Weiteren sind Steuerleitungen, die zur Pumpe 20, zu einem mit der Pumpe verbundenen Elektromotor, zur Turbine 24, zu einer mit der Turbine verbundenen elektrischen Generator oder zu der Pumpen-Turbinen-Einheit 21 führen, in den Figuren nicht dargestellt. Dasselbe gilt auch für Stromleitungen zwischen dem die Pumpe 20 antreibenden Elektromotor bzw. dem mit der Turbine 24 verbundenen Generator, durch welche die zum Aufladen des Pumpspeichers erforderliche elektrische Energie zugeführt und die beim Entladen des Pumpspeichers erzeugte elektrische Energie abgeführt wird. Alle Stromleitungen und Steuerleitungen sind an den Rohren 18, 30, 34 entlang und durch die Hauptbohrung 1 hindurch bis zur Erdoberfläche 7 und von dort in ein Betriebsgebäude 42 geführt, aus dem sämtliche Vorgänge im Pumpspeicherkraftwerk gesteuert werden.

Bei dem in Figur 5 dargestellten Aufladen des Pumpspeichers gemäß einer ersten Ausführungsform wird einer als Elektromotor geschalteten, mit der Pumpen-Turbinen-Einheit 21 verbundenen elektrischen Maschine elektrische Energie zugeführt, wodurch die als Pumpe arbeitende Pumpen-Turbinen-Einheit 21 Arbeitsflüssigkeit 27 aus dem unteren Flüssigkeitsreservoir 4 durch das Hauptrohr 18 in Pfeilrichtung 43 nach oben pumpt, wo die Arbeitsflüssigkeit 37aus der oberen Flüssigkeitsöffnung 25 austritt und das obere Flüssigkeitsreservoir 10 füllt. Das oberhalb des ansteigenden Flüssigkeitsspiegels der Arbeitsflüssigkeit 37 befindliche Gas 44 wird komprimiert und gelangt durch die obere Gasöffnung 32 des Gasaustauschrohrs 30 nach unten, wo es aus der unteren Gasöffnung 31 austritt und den nicht mit Arbeitsflüssigkeit 37 gefüllten oberen Hohlraum der unteren Kaverne 3 füllt.

Figur 6 zeigt einen anderen Betriebszustand des erfindungsgemäßen Pumpspeicherkraftwerks, bei dem die gespeicherte Energie wieder in elektrische Energie verwandelt wird. In diesem Fall gelangt die Arbeitsflüssigkeit 37 aus dem oberen Flüssigkeitsreservoir 10 durch die obere Flüssigkeitsöffnung 25 in das Hauptrohr 18 und fällt gemäß Pfeilrichtung 45 nach unten, bis sie aus der unteren Flüssigkeitsöffnung 22 des Hauptrohrs 18 austritt und dabei die jetzt als Turbine dienende Pumpen-Turbinen-Einheit 21 antreibt, während das untere Flüssigkeitsreservoir 4 gefüllt wird. Die mit der Pumpen-Turbinen-Einheit 21 verbundene elektrische Maschine ist jetzt als elektrischer Generator geschaltet, der elektrische Energie erzeugt, die über nicht gezeigte elektrische Leitungen bis zur Erdoberfläche 7 und von dort zu den Verbrauchern gelangt. Durch den Anstieg der Arbeitsflüssigkeit 37 im unteren Flüssigkeitsreservoir 4 wird das oberhalb des Flüssigkeitsspiegels befindliche Gas 44 komprimiert, so dass es in die untere Gasöffnung 31 des Gasaustauschrohrs 30 eintritt und an der oberen Gasöffnung 32 wieder austritt, um das flüssigkeitsfreie Volumen des oberen Flüssigkeitsreservoirs 10 auszufüllen.

In Figur 7 ist der Aufladevorgang in Verbindung mit einem zweiten Ausführungsbeispiel der Erfindung dargestellt. Zugeführte elektrische Energie treibt einen elektrischen Motor an, der mit der Pumpe 20 verbunden ist. Die Pumpe 20 ist am unteren Ende 19 des Hauptrohrs 18 angeordnet und pumpt die Flüssigkeit 37 aus dem unteren Flüssigkeitsreservoir 4 durch das Hauptrohr 8 nach oben, wo die Arbeitsflüssigkeit 37 durch die obere Flüssigkeitsöffnung 25 in das obere Flüssigkeitsreservoir 10 austritt und dieses füllt. Während dieses Vorgangs sind die obere Gasöffnung 39 und die untere Gasöffnung 41 des Hauptrohrs 18 geschlossen. Beim Turbinenrohr 34 hingegen ist die obere Gasöffnung 38 und die untere Gasöffnung 40 geöffnet, während die obere Flüssigkeitsöffnung 36 verschlossen ist. Die offenen Gasöffnungen 38, 40 erlauben den Übertritt des komprimierten Gases 44 aus der oberen Kaverne 9 in das Turbinenrohr 34 und den Austritt aus der unteren Gasöffnung 14 in die untere Kaverne 3.

Figur 8 zeigt den Betriebszustand der Entladung des Pumpspeichers. In diesem Fall ist die Pumpe 20 abgeschaltet und die obere Flüssigkeitsöffnung 25 des Hauptrohrs 18 geschlossen. Am Turbinenrohr 34 wird die obere Gasöffnung 38 und die untere Gasöffnung 40 geschlossen, während die obere Flüssigkeitsöffnung 36 geöffnet wird. Die Arbeitsflüssigkeit 37 des oberen Flüssigkeitsreservoirs 10 tritt durch die obere Flüssigkeitsöffnung 36 in das Turbinenrohr 34 ein, fällt durch dieses nach unten in Richtung des unteren Flüssigkeitsreservoirs 4, wo sie aus der unteren Flüssigkeitsöffnung 35 des Turbinenrohrs 34 austritt und die dort befindliche Turbine 24 antreibt. Die Turbine 24 ist mit einem elektrischen Generator verbunden, der elektrische Energie erzeugt, die über elektrische Leitungen an die Erdoberfläche 7 und von dort weiter zu Verbrauchern geleitet wird. Das untere Flüssigkeitsreservoir 4 füllt sich bei diesem Vorgang und presst das überhalb des Flüssigkeitsspiegels befindliche Gas 44 zusammen, welches durch die geöffnete untere Gasöffnung 41 des Hauptrohrs 18 zu der geöffneten oberen Gasöffnung 39 gelangt und dort in den oberhalb des Flüssigkeitsspiegels der Arbeitsflüssigkeit 37 befindlichen Raum der oberen Kaverne 9 austritt.

Neben den bereits beschriebenen hat die Erfindung noch die nachfolgenden aufgelisteten Vorteile:
- Alle erforderlichen Hohlräume können von Übertage ohne bergmännische Methoden hergestellt werden, wodurch die Risiken für Menschen minimiert werden.
- Alle erforderlichen Geräte wie Pumpe, Turbine, Generator können durch das Hauptrohr eingeführt, ein- und ausgebaut und herausgezogen werden, wodurch Austausch oder Repatratur der Geräte erleichtert werden.
- Der Platzverbrauch an der Erdoberfläche ist gering.
- Für die Untertagetechnik wie Pumpe, Kabel, Schutzrohre können bewährte Standardkomponenten aus der Erdölproduktion verwendet werden.

### BEZUGSZEICHENLISTE

- 1: Hauptbohrung
- 2: Stelle
- 3: untere Kaverne
- 4: unteres Flüssigkeitsreservoir
- 5: Wandbereich
- 6: Wandbereich
- 7: Erdoberfläche
- 8: Kavernendach
- 9: obere Kaverne
- 10: oberes Flüssigkeitsreservoir
- 11: Kavernenboden
- 12: Kavernendach
- 13: Solrohr
- 14: unteres Ende
- 15: Wasser
- 16: Blanket
- 17: gesättigte Salzlauge
- 18: Hauptrohr
- 19: unteres Ende
- 20: Pumpe
- 21: Pumpen-Turbinen-Einheit
- 22: untere Flüssigkeitsöffnung
- 23: Kavernenboden
- 24: Turbine
- 25: obere Flüssigkeitsöfifnung
- 26: Dichtung
- 27: Dichtung
- 28: Dichtung
- 29: Hilfsbohrung
- 30: Gasaustauschrohr
- 31: untere Gasöffnung
- 32: obere Gasöffnung
- 33: Nebenbohrung
- 34: Turbinenrohr
- 35: untere Flüssigkeitsöffnung
- 36: obere Flüssigkeitsöffnung
- 37: Arbeitsflüssigkeit
- 38: obere Gasöffnung
- 39: obere Gasöffnung
- 40: untere Gasöffnung
- 41: untere Gasöffnung
- 42: Betriebsgebäude
- 43: Pfeilrichtung
- 44: Gas
- 45: Pfeilrichtung

## Patentansprüche

1. Pumpspeicherkraftwerk mit mindestens einem oberen Flüssigkeitsreservoir (10) und mindestens einem unteren Flüssigkeitsreservoir (4), die zur Aufnahme von Arbeitsflüssigkeit (37) dienen, mit mindestens einer durch einen Elektromotor antreibbaren Pumpe (20, 21), mittels der die Arbeitsflüssigkeit (37) aus dem mindestens einen unteren Flüssigkeitsreservoir (4) über mindestens eine Verbindungsleitung in das mindestens eine obere Flüssigkeitsreservoir (10) pumpbar ist, mit mindestens einer mit einem elektrischen Generator verbundenen Turbine (21, 24), die von der Arbeitsflüssigkeit (37) antreibbar ist, wenn diese von dem mindestens einen oberen Flüssigkeitsreservoir (10) über mindestens eine Verbindungsleitung in das mindestens eine untere Flüssigkeitsreservoir (4) fließt, wobei die Flüssigkeitsreservoirs (4, 10) aus ausgesolten Kavernen (3, 9) in einer Salzlagerstätte, z. B. einem Salzstock bestehen, wobei die Kavernen (3, 9) über mindestens eine im Wesentlichen vertikale Verbindungsleitung verbunden sind, deren unteres Ende (19) bis in den Bereich des Kavernenbodens (23) der unteren Kaverne (3) ragt, **dadurch gekennzeichnet, dass** eine Kaverne (9) des oberen Flüssigkeitsreservoirs (10) im Wesentlichen vertikal über einer unteren Kaverne (3) des unteren Flüssigkeitsreservoirs (4) angeordnet ist und dass die Pumpe (20) oder Turbine (24) oder eine Pumpen-Turbinen-Einheit (21) am unteren Ende (19) der Verbindungsleitung angeordnet ist, wobei die Verbindungsleitung ein Hauptrohr (18) mit einem Rohrdurchmesser zwischen 0,4 m und 1,0 m ist, wobei sich das die Verbindungsleitung bildende Hauptrohr (18) durch die obere Kaverne (9) hindurch und weiter nach oben bis zur Erdoberfläche (7) erstreckt.

2. Pumpspeicherkraftwerk nach Anspruch 1, **dadurch gekennzeichnet, dass** die Arbeitsflüssigkeit (37) eine gesättigte Salzlauge ist.

3. Pumpspeicherkraftwerk nach Anspruch 1 oder 2, **dadurch gekennzeichnet, dass** sich die Kavernen (3, 9) vom Kavernendach (12, 8) bis zum Kavernenboden (23, 11) jeweils über einen Höhenbereich von 100 m bis 200 m, vorzugsweise über 150 m, erstrecken.

4. Pumpspeicherkraftwerk nach einem der vorhergehenden Ansprüche, **dadurch gekennzeichnet, dass** das Kavernendach (8) der oberen Kaverne (9) in einer Tiefe zwischen 200 m und 800 m unter der Erdoberfläche (7) angeordnet ist, vorzugsweise in einer Tiefe von 700 m.

5. Pumpspeicherkraftwerk nach einem der vorhergehenden Ansprüche, **dadurch gekennzeichnet, dass** das Kavernendach (12) der unteren Kaverne (3) in einer Tiefe zwischen 600 m und 1500 m unter der Erdoberfläche (7) angeordnet ist, vorzugsweise in einer Tiefe von 1200 m.

6. Pumpspeicherkraftwerk nach einem der vorhergehenden Ansprüche, **dadurch gekennzeichnet, dass** die Kavernen (3, 9) jeweils ein Volumen zwischen 200.000 m³ und 400.000 m³, vorzugsweise von 300.000, m³, aufweisen.

7. Pumpspeicherkraftwerk nach einem der vorhergehenden Ansprüche, **dadurch gekennzeichnet, dass** die Verbindungsleitung im Bereich des Kavernenbodens (11) der oberen Kaverne (9) eine obere Flüssigkeifsöffnung (25) mit einem Absperrventil aufweist.

8. Pumpspeicherkraftwerk nach einem der vorhergehenden Ansprüche, **dadurch gekennzeichnet, dass** das Hauptrohr (18) einen Rohrdurchmesser von 0,56 m aufweist.

9. Pumpspeicherkraftwerk nach einem der vorhergehenden Ansprüche, **dadurch gekennzeichnet, dass** sich das Hauptrohr (18) durch eine von der Erdoberfläche (7) bis zum Kavernendach (8) der oberen Kaverne (9) und weiter vom Kavernenboden (11) der oberen Kaverne (9) bis zum Kavernendach (12) der unteren Kaverne (3) reichende Hauptbohrung (1) erstreckt.

10. Pumpspeicherkraftwerk nach Anspruch 9, **dadurch gekennzeichnet, dass** der Wandbereich (5) der Hauptbohrung (1) zwischen der Erdoberfläche (7) und dem Kavernendach (8) der oberen Kaverne (9) und der Wandbereich (6) der Hauptbohrung (1) zwischen dem Kavernenboden (11) der oberen Kaverne (9) und dem Kavernendach (12) der unteren Kaverne (3) mit einem Schutzrohr und Zement ausgekleidet ist.

11. Pumpspeicherkraftwerk nach Anspruch 9 oder 10, **dadurch gekennzeichnet, dass** das Hauptrohr (18) in den beiden Bereichen der Kavernendächer (8, 12) der Kavernen (9, 3) und im Bereich des Kavernenbodens (11) der oberen Kaverne (9) gegenüber der Hauptbohrung (1) abgedichtet ist.

12. Pumpspeicherkraftwerk nach einem der vorhergehenden Ansprüche, **dadurch gekennzeichnet, dass** ein Gasaustauschrohr (13) vorgesehen ist, das an seinem unteren Ende eine untere Gasöffnung (31) aufweist und in den Bereich des Kavernendaches (12) der unteren Kaverne (3) ragt und das im Bereich des Kavernendaches (8) der oberen Kaverne (9) eine obere Gasöffnung (32) aufweist.

13. Pumpspeicherkraftwerk nach Anspruch 12, **dadurch gekennzeichnet, dass** die untere Gasöffnung (31) und die obere Gasöffnung (32) des Gasaustauschrohrs (30) jeweils durch Absperrventile verschließbar sind.

14. Pumpspeicherkraftwerk nach einem der Ansprüche 1 bis 11, **dadurch gekennzeichnet, dass** zwischen der oberen Kaverne (9) und der unteren Kaverne (3) zwei Verbindungsleitungen vorgesehen sind, wobei am unteren Ende (19) der ersten Verbindungsleitung die Pumpe (20) und am unteren Ende der zweiten Verbindungsleitung die Turbine (24) angeordnet ist.

15. Pumpspeicherkraftwerk nach Anspruch 14, **dadurch gekennzeichnet, dass** beide Verbindungsleitungen im Bereich des Kavernendaches (8) der oberen Kaverne (9) und im Bereich des Kavernendaches (12) der unteren Kaverne (3) jeweils zusätzliche Gasöffnungen (38 bis 41) mit Absperrventilen aufweisen.

16. Verfahren zur Herstellung eines Pumpspeicherkraftwerks nach einem der vorhergehenden Ansprüche, **gekennzeichnet durch** die folgenden Verfahrensschritte:
a. Abteufen einer Hauptbohrung (1) in einem Salzstock bis an eine Stelle (2), wo eine untere Kaverne (3) für ein unteres Flüssigkeitsreservoir (4) geplant ist;
b. Auskleiden der Bohrungswände mit einem Schutzrohr und Zement im Wandbereich (5) zwischen der Erdoberfläche (7) und dem Kavernendach (8) einer geplanten oberen Kaverne (9) für ein oberes Flüssigkeitsreservoir (10) und im Wandbereich (6) zwischen dem Kavernenboden (11) der geplanten oberen Kaverne (9) und dem Kavernendach (12) der geplanten unteren Kaverne (3);
c. Einführung eines Solrohrs (13) in die Hauptbohrung (1), bis sein unteres Ende (14) im Bereich der herzustellenden unteren Kaverne (3) zu liegen kommt, und Herstellen der unteren Kaverne (3) **durch** Aussolen;
d. Herausziehen des Solrohrs (13) aus der mit gesättigter Salzlauge (17) gefüllten unteren Kaverne (3) und der Hauptbohrung (1), bis sein unteres Ende (14) im Bereich der herzustellenden oberen Kaverne (9) zu liegen kommt, und Herstellen der oberen Kaverne (9) **durch** Aussolen;
e. Einführen eines an seinem unteren Ende (19) mit einer unteren Flüssigkeitsöffnung (22) versehenen und mit einer Pumpe (20) oder einer Pumpen-Turbinen-Einheit (21) verbundenen Hauptrohrs (18) in die Hauptbohrung (1), so dass das untere Ende (19) im Bereich des Kavernenbodens (23) der unteren Kaverne (3) liegt, wobei eine obere Flüssigkeitsöffnung (25) des Hauptrohrs (18) im Bereich des Kavernenbodens (11) der oberen Kaverne (9) liegt;
f. Abdichten des Hauptrohrs (18) gegenüber der Hauptbohrung (1) im Bereich des Kavernendachs (8) und des Kavernenbodens (11) der oberen Kaverne (9) und im Bereich des Kavernendachs (12) der unteren Kaverne (3).

17. Verfahren nach Anspruch 16, bei dem das Hauptrohr (18) an seinem unteren Ende (22) mit einer Pumpen-Turbinen-Einheit (21) verbunden ist, **dadurch gekennzeichnet, dass** in der Nähe der Hauptbohrung (1) eine im Wesentlichen parallel zur Hauptbohrung (1) verlaufende Hilfsbohrung (29) abgeteuft und mit einem Gasaustauschrohr (30) versehen wird, so dass eine untere Gasöffnung (31) am unteren Ende des Gasaustauschrohrs (30) im Bereich des Kavernendachs (12) der unteren Kaverne (3) und eine obere Gasöffnung (32) des Gasaustauschrohrs (30) im Bereich des Kavernendachs (8) der oberen Kaverne (9) liegt.

18. Verfahren nach Anspruch 16, bei dem das Hauptrohr (18) an seinem unteren Ende (19) mit einer Pumpe (20) verbunden ist, **dadurch gekennzeichnet, dass** in der Nähe der Hauptbohrung (1) eine im Wesentlichen parallel zur Hauptbohrung (1) verlaufenden Nebenbohrung (33) abgeteuft und mit einem Turbinenrohr (34) versehen wird, das an seinem unteren Ende mit einer unteren Flüssigkeitsöffnung (35) versehen und mit einer Turbine (24) verbunden ist, so dass das untere Ende mit der Flüssigkeitsöffnung (35) im Bereich des Kavernenbodens (23) der unteren Kaverne (3) liegt, wobei eine obere Flüssigkeitsöffnung (36) des Turbinenrohrs (34) im Bereich des Kavernenbodens (11) der oberen Kaverne (9) angeordnet ist.

## Claims

1. Pumped storage power station comprising at least one upper fluid reservoir (10) and at least one lower fluid reservoir (4) for receiving working fluid (37), comprising at least one pump (20, 21) which can be driven by an electric motor, by means of which pump the working fluid (37) can be pumped from the at least one lower fluid reservoir (4) into the at least one upper fluid reservoir (10) via at least one connecting line, comprising at least one turbine (21, 24) connected to an electric generator, which turbine can be driven by the working fluid (37) when said fluid flows from the at least one upper fluid reservoir (10) into the at least one lower fluid reservoir (4) via at least one connecting line, the fluid reservoirs (4, 10) consisting of mined caverns (3, 9) in a salt deposit, e.g. a salt dome, the caverns (3, 9) being connected by at least one substantially vertical connecting line, the lower end (19) of which protrudes into the region of the cavern base (23) of the lower cavern (3), **characterised in that** a cavern (9) of the upper fluid reservoir (10) is arranged in a substantially vertical manner above a lower cavern (3) of the lower fluid reservoir (4) and **in that** the pump (20) or turbine (24) or a pump-turbine unit (21) is arranged at the lower end (19) of the connecting line, the connecting line being a main pipe (18) having a pipe diameter of between 0.4 m and 1.0 m, the main pipe (18) which forms the connecting line extending through the upper cavern (9) and further up to the earth's surface (7).

2. Pumped storage power station according to claim 1, **characterised in that** the working fluid (37) is a saturated brine.

3. Pumped storage power station according to either claim 1 or claim 2, **characterised in that** the caverns (3, 9) each extend over a height range of from 100 m to 200 m, preferably 150 m, from the cavern roof (12, 8) to the cavern base (23, 11).

4. Pumped storage power station according to any of the preceding claims, **characterised in that** the cavern roof (8) of the upper cavern (9) is arranged at a depth of between 200 m and 800 m below the earth's surface (7), preferably at a depth of 700 m.

5. Pumped storage power station according to any of the preceding claims, **characterised in that** the cavern roof (12) of the lower cavern (3) is arranged at a depth of between 600 m and 1500 m below the earth's surface (7), preferably at a depth of 1200 m.

6. Pumped storage power station according to any of the preceding claims, **characterised in that** the caverns (3, 9) each have a volume of between 200,000 m³ and 400,000 m³, preferably of 300,000 m³.

7. Pumped storage power station according to any of the preceding claims, **characterised in that**, in the region of the cavern base (11) of the upper cavern (9), the connecting line comprises an upper fluid opening (25) which has a stop valve.

8. Pumped storage power station according to any of the preceding claims, **characterised in that** the main pipe (18) has a pipe diameter of 0.56 m.

9. Pumped storage power station according to any of the preceding claims, **characterised in that** the main pipe (18) extends through a main bore (1) which extends from the earth's surface (7) to the cavern roof (8) of the upper cavern (9) and further extends from the cavern base (11) of the upper cavern (9) to the cavern roof (12) of the lower cavern (3).

10. Pumped storage power station according to claim 9, **characterised in that** the wall region (5) of the main bore (1) between the earth's surface (7) and the cavern roof (8) of the upper cavern (9) and the wall region (6) of the main bore (1) between the cavern base (11) of the upper cavern (9) and the cavern roof (12) of the lower cavern (3) is lined with a protective tube and cement.

11. Pumped storage power station according to either claim 9 or claim 10, **characterised in that** the main pipe (18) is sealed with respect to the main bore (1) in the two regions of the cavern roofs (8, 12) of the caverns (9, 3) and in the region of the cavern base (11) of the upper cavern (9).

12. Pumped storage power station according to any of the preceding claims, **characterised in that** a gas exchange pipe (13) is provided which has a lower gas opening (31) at its lower end and which protrudes into the region of the cavern roof (12) of the lower cavern (3) and which has an upper gas opening (32) in the region of the cavern roof (8) of the upper cavern (9).

13. Pumped storage power station according to claim 12, **characterised in that** the lower gas opening (31) and the upper gas opening (32) of the gas exchange pipe (30) can each be closed by stop valves.

14. Pumped storage power station according to any of claims 1 to 11, **characterised in that** two connecting lines are provided between the upper cavern (9) and the lower cavern (3), the pump (20) being arranged at the lower end (19) of the first connecting line and the turbine (24) being arranged at the lower end of the second connecting line.

15. Pumped storage power station according to claim 14, **characterised in that** the two connecting lines comprise additional gas openings (38 to 41) in the region of the cavern roof (8) of the upper cavern (9) and in the region of the cavern roof (12) of the lower cavern (3) respectively, which gas openings have stop valves.

16. Method for producing a pumped storage power station according to any of the preceding claims, **characterised by** the following method steps:
a. sinking a main bore (1) in a salt dome as far as a point (2) at which a lower cavern (3) is planned for a lower fluid reservoir (4);
b. lining the bore walls with a protective tube and cement in the wall region (5) between the earth's surface (7) and the cavern roof (8) of a planned upper cavern (9) for an upper fluid reservoir (10) and in the wall region (6) between the cavern base (11) of the planned upper cavern (9) and the cavern roof (12) of the planned lower cavern (3);
c. inserting a brine pipe (13) into the main bore (1) until its lower end (14) comes to rest in the region of the lower cavern (3) to be produced, and producing the lower cavern (3) by mining;
d. withdrawing the brine pipe (13) from the lower cavern (3) which is filled with saturated brine (17) and from the main bore (1), until the lower end (14) of said pipe comes to rest in the region of the upper cavern (9) to be produced, and producing the upper cavern (9) by mining;
e. inserting a main pipe (18), which is provided with a lower fluid opening (22) at its lower end (19) and is connected to a pump (20) or to a pump-turbine unit (21), into the main bore (1), such that the lower end (19) rests in the region of the cavern base (23) of the lower cavern (3), an upper fluid opening (25) of the main pipe (18) being positioned in the region of the cavern base (11) of the upper cavern (9);
f. sealing the main pipe (18) with respect to the main bore (1) in the region of the cavern roof (8) and the cavern base (11) of the upper cavern (9) and in the region of the cavern roof (12) of the lower cavern (3).

17. Method according to claim 16 in which the main pipe (18) is connected at its lower end (22) to a pump-turbine unit (21), **characterised in that** an auxiliary bore (29), extending substantially in parallel with the main bore (1), is sunk and is provided with a gas exchange pipe (30) in the vicinity of the main bore (1), such that a lower gas opening (31) is positioned at the lower end of the gas exchange pipe (30) in the region of the cavern roof (12) of the lower cavern (3) and an upper gas opening (32) of the gas exchange pipe (30) is positioned in the region of the cavern roof (8) of the upper cavern (9).

18. Method according to claim 16 in which the main pipe (18) is connected at its lower end (19) to a pump (20), **characterised in that** a secondary bore (33), extending substantially in parallel with the main bore (1), is sunk and is provided with a turbine pipe (34) in the vicinity of the main bore (1), which turbine pipe is provided at its lower end with a lower fluid opening (35) and is connected to a turbine (24) such that the lower end comprising the fluid opening (35) is positioned in the region of the cavern base (23) of the lower cavern (3), an upper fluid opening (36) of the turbine pipe (34) being arranged in the region of the cavern base (11) of the upper cavern (9).

## Revendications

1. Centrale hydraulique d'accumulation par pompage, comprenant au moins un réservoir supérieur de fluide (10) et au moins un réservoir inférieur de fluide (4), qui servent à recevoir un fluide de travail (37), au moins une pompe (20, 21) pouvant être entraînée par un moteur électrique, au moyen de laquelle le fluide de travail (37) peut être pompé du ou des réservoirs inférieurs de fluide (4) dans le ou les réservoirs supérieurs de fluide (10) en passant par au moins une conduite de liaison, au moins une turbine (21, 24) reliée à un générateur électrique, qui peut être entraînée par le fluide de travail (37), lorsque ce dernier s'écoule du ou des réservoirs supérieurs de fluide (10) dans le ou les réservoirs inférieurs de fluide (4) en passant par au moins une conduite de liaison, les réservoirs de fluide (4, 10) étant constitués de cavités (3, 39) excavées dans un gisement de sel, par exemple un dôme salin, les cavités (3, 9) étant reliées par l'intermédiaire d'au moins une conduite de liaison sensiblement verticale, dont l'extrémité inférieure (19) fait saillie jusque dans la zone du fond (23) de cavité de la cavité inférieure (3), **caractérisée en ce qu'**une cavité (9) du réservoir supérieur de fluide (10) est disposée sensiblement verticalement au-dessus d'une cavité inférieure du réservoir inférieur de fluide (4) et **en ce que** la pompe (20) ou la turbine (24) ou une unité pompes-turbines (21) est disposée à l'extrémité inférieure (19) de la conduite de liaison, la conduite de liaison étant un tuyau principal (18) présentant un diamètre de tuyau compris entre 0,4 m et 1,0 m, le tuyau principal (18) formant la conduite de liaison s'étendant à travers la cavité supérieure (9) et plus loin vers le haut jusqu'à la surface du sol (7).

2. Centrale hydraulique d'accumulation par pompage selon la revendication 1, **caractérisée en ce que** le fluide de travail (37) est une liqueur saline saturée.

3. Centrale hydraulique d'accumulation par pompage selon la revendication 1 ou 2, **caractérisée en ce que** les cavités (3, 9) s'étendent du toit (12, 8) de cavité aux fonds (23, 11) de cavité respectivement sur une plage de hauteurs de 100 m à 200 m, de préférence sur 150 m

4. Centrale hydraulique d'accumulation par pompage selon l'une quelconque des revendications précédentes, **caractérisée en ce que** le toit (8) de cavité de la cavité supérieure (9) est disposé à une profondeur comprise entre 200 m et 800 m sous la surface de la terre (7), de préférence à une profondeur de 700 m.

5. Centrale hydraulique d'accumulation par pompage selon l'une quelconque des revendications précédentes, **caractérisée en ce que** le toit (12) de cavité de la cavité inférieure (3) est disposé à une profondeur comprise entre 600 m et 1500 m sous la surface de la terre (7), de préférence à une profondeur de 1200 m.

6. Centrale hydraulique d'accumulation par pompage selon l'une quelconque des revendications précédentes, **caractérisée en ce que** les cavités (3, 9) présentent respectivement un volume compris entre 200 000 m³ et 400 000 m³, de préférence de 300 000 m³.

7. Centrale hydraulique d'accumulation par pompage selon l'une quelconque des revendications précédentes, **caractérisée en ce que** la conduite de liaison présente dans la zone du fond (11) de cavité de la cavité supérieure (9) une ouverture supérieure de passage de fluide (25) comprenant une soupape d'arrêt.

8. Centrale hydraulique d'accumulation par pompage selon l'une quelconque des revendications précédentes, **caractérisée en ce que** le tuyau principal (18) présente un diamètre de tuyau de 0,56 m.

9. Centrale hydraulique d'accumulation par pompage selon l'une quelconque des revendications précédentes, **caractérisée en ce que** le tuyau principal (18) s'étend à travers un trou principal (1) parvenant de la surface du sol (7) au toit (8) de cavité de la cavité supérieure (9) et plus loin du fond (11) de cavité de la cavité supérieure (9) au toit (12) de cavité de la cavité inférieure (3).

10. Centrale hydraulique d'accumulation par pompage selon la revendication 9, **caractérisée en ce que** la zone de paroi (5) du trou principal (1) entre la surface du sol (7) et le toit (8) de cavité de la cavité supérieure (9) et la zone de paroi (6) du trou principal (1) entre le fond (11) de cavité de la cavité supérieure (9) et le toit (12) de cavité de la cavité inférieure (3) sont revêtues d'un tuyau protecteur et de ciment.

11. Centrale hydraulique d'accumulation par pompage selon la revendication 9 ou 10, **caractérisée en ce que** le tuyau principal (18) dans les deux zones des toits (8, 12) de cavité des cavités (9, 3) et dans la zone du fond (11) de cavité de la cavité supérieure (9) est étanchéifié par rapport au trou principal (1).

12. Centrale hydraulique d'accumulation par pompage selon l'une quelconque des revendications précédentes, **caractérisée en ce qu'**un tuyau d'échange des gaz (13) est prévu, qui comprend à son extrémité inférieure une ouverture de passage des gaz (31) et fait saillie dans la zone du toit (12) de cavité de la cavité inférieure (3) et qui comprend dans la zone du toit (8) de cavité de la cavité supérieure (9) une ouverture supérieure de passage des gaz (32).

13. Centrale hydraulique d'accumulation par pompage selon la revendication 12, **caractérisée en ce que** l'ouverture inférieure de passage des gaz (31) et l'ouverture supérieure de passage des gaz (32) du tuyau d'échange des gaz (30) peuvent être fermées chacune par des soupapes d'arrêt.

14. Centrale hydraulique d'accumulation par pompage selon l'une quelconque des revendications 1 à 11, **caractérisée en ce que** deux conduites de liaison sont prévues entre la cavité supérieure (9) et la cavité inférieure (3), la pompe (20) étant disposée à l'extrémité inférieure (19) de la première conduite de liaison et la turbine (24) étant disposée à l'extrémité inférieure de la deuxième conduite de liaison.

15. Centrale hydraulique d'accumulation par pompage selon la revendication 14, **caractérisée en ce que** les deux conduites de liaison comprennent dans la zone du toit (8) de cavité de la cavité supérieure (9) et dans la zone du toit (12) de cavité de la cavité inférieure (3) respectivement des ouvertures de passage des gaz (38 à 41) supplémentaires comprenant des soupapes d'arrêt.

16. Procédé de production d'une centrale hydraulique d'accumulation par pompage selon l'une quelconque des revendications précédentes, **caractérisée par** les étapes de procédé suivantes :
a. le creusement d'un trou principal (1) dans un dôme salin jusqu'à un emplacement (20) où une cavité inférieure (3) pour un réservoir inférieur de fluide (4) est planifiée ;
b. le revêtement des parois de trou d'un tuyau protecteur et de ciment dans la zone de paroi (5) entre la surface du sol (7) et le toit (8) de cavité d'une cavité supérieure (9) planifiée pour un réservoir supérieur de fluide (10) et dans la zone de paroi (6) entre le fond de cavité (11) de la cavité supérieure (9) planifiée et le toit (12) de cavité de la cavité inférieure (3) planifiée ;
c. l'introduction d'un tuyau d'excavation (13) dans le trou principal (1), jusqu'à ce que l'extrémité inférieure (14) dudit tuyau vienne se situer dans la zone de la cavité inférieure (3) à produire, et la production de la cavité inférieure (3) par excavation ;
d. l'extraction du tuyau d'excavation (13) de la cavité inférieure (3) remplie de liqueur saline saturée (17) et du trou principal (1), jusqu'à ce que l'extrémité inférieure (14) dudit tuyau vienne se situer dans la zone de la cavité supérieure (9) à produire, et la production de la cavité supérieure (9) par excavation ;
e. l'introduction d'un tuyau principal (18), pourvu à son extrémité inférieure (19) d'une ouverture inférieure de passage de fluide (22) et relié à une pompe (20) ou à une unité pompes-turbines, dans le tuyau principal (1), de sorte que l'extrémité inférieure (19) se situe dans la zone du fond (23) de cavité de la cavité inférieure (3), une ouverture supérieure de passage de fluide (25) du tuyau principal (18) se situant dans la zone du fond de cavité (11) de la cavité supérieure (9).
f. l'étanchéification du tuyau principal (18) par rapport au trou principal (1) dans la zone du toit (8) de cavité et du fond (11) de cavité de la cavité supérieure (9) et dans la zone du toit (12) de cavité de la cavité inférieure (3).

17. Procédé selon la revendication 16, selon lequel le tuyau principal (18) est relié par son extrémité inférieure (22) à une unité pompes-turbines (21), **caractérisé en ce qu'**un trou auxiliaire (29) s'étendant sensiblement parallèlement au trou principal (1) est creusé à proximité du trou principal (1) et est pourvu d'un tuyau d'échange des gaz (30), de sorte qu'une ouverture inférieure de passage des gaz (31) se situe à l'extrémité inférieure du tuyau d'échange des gaz (30) dans la zone du toit (12) de cavité de la cavité inférieure (3) et qu'une ouverture supérieure de passage des gaz (32) du tuyau d'échange des gaz (30) se situe dans la zone du toit (8) de cavité de la cavité supérieure (9).

18. Procédé selon la revendication 16, selon lequel le tuyau principal (18) est relié par son extrémité inférieure (19) à une pompe (20), **caractérisé en ce qu'**un trou secondaire (33) s'étendant sensiblement parallèlement au trou principal (1) est creusé à proximité du trou principal (1) et est pourvu d'un tuyau de turbine (34), qui est pourvu à son extrémité inférieure d'une ouverture inférieure de passage de fluide (35) et est relié à une turbine (24), de sorte que l'extrémité inférieure présentant l'ouverture de passage de fluide (35) se situe dans la zone du fond (23) de cavité de la cavité inférieure (3), une ouverture supérieure de passage de fluide (36) du tuyau de turbine (34) étant ménagée dans la zone du fond (11) de cavité de la cavité supérieure (9).
